# EUROPÄISCHE PATENTSCHRIFT

(11) **EP 2 274 527 B1**
(45) Veröffentlichungstag und Bekanntmachung des Hinweises auf die Patenterteilung: **03.12.2014**
(21) Anmeldenummer: 09741894.1
(22) Anmeldetag: 07.05.2009
(51) Int. Cl.: F16D 3/78

(54) **ELASTISCHER GELENKKÖRPER FÜR EINE WELLENANORDNUNG**
ELASTIC JOINT BODY FOR A SHAFT ARRANGEMENT
CORPS ARTICULÉ ÉLASTIQUE POUR ENSEMBLE D'ARBRES

(30) Priorität: 07.05.2008 DE 102008022475
(43) Veröffentlichungstag der Anmeldung: 19.01.2011
(73) Patentinhaber: Süddeutsche Gelenkscheibenfabrik GmbH & Co. KG, 84478 Waldkraiburg (DE)
(72) Erfinder: ROTHE, Achim, 84453 Mühldorf (DE); JERYE, Steffen, 83527 Haag (DE); NINDEL, Wolfgang, 84453 Mühldorf (DE); GRÜNWALD, Thomas, 84453 Mühldorf (DE)
(74) Vertreter: Thum, Bernhard
(86) Internationale Anmeldenummer: PCT/EP2009/003270
(87) Internationale Veröffentlichungsnummer: WO 2009/135675

(56) Entgegenhaltungen:
- CH-A- 321 633
- DE-A1- 3 218 521
- FR-A- 2 313 595
- GB-A- 546 351
- JP-A- 11 325 101
- JP-U- 55 001 067
- US-A1- 2003 022 720

## Beschreibung

Die vorliegende Erfindung betrifft einen elastischen Gelenkkörper für eine Wellenanordnung zum gelenkigen Verbinden zweier Wellenabschnitte mit einer Mehrzahl von Buchsen, die in Umfangsrichtung in vorbestimmten Winkelabständen bezüglich einer Mittelachse des Gelenkkörpers angeordnet sind, einer Mehrzahl von Schlingenpaketen, wobei jedes Schlingenpaket jeweils zwei benachbarte Buchsen umschlingt, und einer gummielastischen Ummantelung, in die die Schlingenpakete und die Buchsen zumindest teilweise eingebettet sind.

Derartige Gelenkkörper sind aus dem Stand der Technik bekannt und beispielsweise in der deutschen Offenlegungsschrift DE 27 05 598 A1 offenbart. Dieses Dokument beschreibt eine elastische Gelenkscheibe, bei der jeweils zwei benachbarte Buchsen von textilen Schlingenpaketen umschlungen sind, wobei diese Anordnung in eine Gummimasse eingebettet ist. Obgleich derartige Gelenkscheiben weit verbreitet sind und hohe Zuverlässigkeit bei bereits langer Lebensdauer aufweisen, gehen neuerdings Bemühungen dahin, Gelenkscheiben in Hinblick auf die durch die stetig steigenden Motorleistungen zunehmenden mechanischen Belastungen auszulegen und deren Lebensdauer weiter zu verlängern.

Aus dem Stand der Technik sind weitere Lösungen für elastische Gelenkkörper zum Verbinden zweier Wellenabschnitte bekannt.

So zeigt das Dokument DE 42 04 973 A1 eine Gelenkscheibe mit einem Basisskelett aus Kunststoff. Das Basisskelett besteht aus sechs einstückig jeweils mit einer Außenhülse spritzgegossenen Kunststoffsegmenten. Die Außenhülse weist eine Innenhülse auf, die über Gummipuffer mit der Außenhülse und den Kunststoffsegmenten in Verbindung steht. Die Beweglichkeit der Innenhülse wird durch Schlitze zwischen den Gummipuffern gewährleistet. Das Basisskelett mit den Kunststoffsegmenten und den darin aufgenommenen Hülsen wird zur Herstellung der Gelenkscheibe mit Kautschuk umspritzt und anschließend vulkanisiert.

Ferner offenbart DE 42 43 447 A1 ein Kupplungselement zum Übertragen von Drehmomenten mit sechs Bereichen aus elastischem Material, die jeweils abwechselnd mit drei Versteifungseinlagen in einem Grundkörper des Kupplungselements angeordnet sind. Der Grundkörper weist sechs dreieckförmige Aussparungen auf, die jeweils einen metallischen dreieckförmigen Körper mit einer Bohrung aufnehmen können und zusammen mit dem Grundkörper das Kupplungselement bilden. Das Kupplungselement kann durch die in den dreieckförmigen Körpern vorgesehenen Bohrungen mit Flanschen von Wellenabschnitten wechselseitig verschraubt werden.

Das Dokument DE 10 2006 001 200 A1 offenbart eine biegsame Antriebsstrangkupplung mit einer Einlage, die ein erstes Einlageelement und ein zweites Einlageelement umfasst. Die beiden Einlageelemente weisen jeweils einen Befestigungsabschnitt zur Befestigung an Wellenabschnitten auf und sind an einem zentralen Nabenabschnitt angeordnet. Die Einlagenelemente werden mit einem zweiten Material übergossen, das sich in den Zwischenräumen zwischen den beiden Einlageelementen ausbreitet und eine Ummantelung für die Einlageelemente bildet.

Das Dokument CH 321633 offenbart eine elastische Gelenkscheibe, bei der Fadenwickel je zwei benachbarte Spulen umschlingen. Der Abstand zwischen den Spulen wird durch Stützkerne bestimmt. Die Stützkerne bestehen ebenso wie ein Mantelkörper aus vulkanisiertem Gummi. Je zwei gleichachsige Spulen sitzen auf einer gemeinsamen Buchse, deren außen umgebördelte Ränder Schutzbleche halten. Die zwei Spulen werden auf den fertig vulkanisierten Stützkern derart aufgeschoben, dass sie sich gegen dessen ausgehöhlte Enden abstützen.

Das Dokument FR2313595 offenbart einen elastischen Gelenkkörper gemäß dem Oberbegriff von Anspruch 1.

In dem vorstehend beschriebenen Stand der Technik sind verschiedene konstruktive Gestaltungsmöglichkeiten für einen Gelenkkörper zum Übertragen von Drehmomenten zwischen zwei Wellenabschnitten beschrieben, die jeweils aus Einlagen bzw. Einlagenelementen aus einem anderen Material als dem für die gummielastischen Ummantelung verwendeten Material gebildet und versteift wurden.

Im Gegensatz hierzu ist es Aufgabe der vorliegenden Erfindung einen elastischen Gelenkkörper der eingangs bezeichneten Art bereitzustellen, der bei gleicher Dimensionierung den gestiegenen Anforderungen an die Drehmomentübertragung gerecht wird und gleichzeitig eine Erhöhung der Lebensdauer möglich macht.

Diese Aufgabe wird durch einen elastischen Gelenkkörper der eingangs bezeichneten Art gelöst, bei dem die wenigstens eine Stützanordnung wenigstens einen einer einzelnen Buchse zugeordneten Stützkörper aufweist, wobei der Einlegekörper im Abstand zu den Buchsen und dem den Buchsen zugeordneten Stützkörper angeordnet ist, wobei der Stützkörper auf einer Buchse zwischen zwei Kragen angeordnet ist.

Durch die Verwendung einer Stützanordnung bei dem erfindungsgemäßen elastischen Gelenkkörper wird der Kraftaufnahmeanteil bzw. Traganteil der Schlingenpakete erhöht und es wird vermieden, dass die Schlingenpakete im Belastungsfall aneinander reiben, was sich negativ auf die Lebensdauer des Gelenkkörpers auswirken könnte. Die Stützanordnung unterbindet weitgehend derartige Reibwirkungen. Ferner wird der elastische Gelenkkörper durch die Stützanordnung versteift, wodurch eine höhere Drehmomentaufnahme erreicht werden kann. Die Stützanordnung sorgt insgesamt für eine verbesserte Führung der Fadenpakete im Gelenkkörper. Dadurch wird der Traganteil jedes Fadenpakets erhört, so dass der Gelenkkörper insgesamt höheren Belastungen über eine längere Betriebsdauer standhalten kann.

Eine Weiterbildung der Erfindung sieht vor, dass einander benachbarte Buchsen paarweise von wenigstens einem der Schlingenpakete umschlungen sind, wobei die Stützanordnung eine Führung für das wenigstens eine der Schlingenpakete bilden kann.

Zur Entlastung und Unterstützung der parallelen Stränge der Schlingenpakete zwischen benachbarten Buchsen sieht die Erfindung ferner vor, dass
die wenigstens eine Stützanordnung einen zwischen zwei benachbarten Buchsen im Abstand zu diesen angeordneten Einlegekörper aufweist. Durch das Vorsehen eines Einlegekörpers in dem erfindungsgemäßen Gelenkkörper können bei gleich bleibenden äußeren Abmessungen höhere Drehmomente übertragen werden. Die Einlegekörper können konstruktiv derart gestaltet werden, dass sie eine günstigere Flächenpressung zwischen den einzelnen Komponenten der Stützanordnung ermöglichen. Dadurch können Spannungsspitzen im Gelenkkörper vermieden und die im Betrieb auftretenden mechanischen Belastungen gleichmäßiger im Gelenkkörper verteilt werden.

Um die Schlingenpakete aufnehmen und führen zu können, sieht eine bevorzugte Ausführungsform vor, dass der wenigstens eine Einlegekörper Aufnahmebereiche für parallele Stränge wenigstens eines Schlingenpakets aufweist. Durch die zwischen zwei benachbarten Buchsen angeordneten Gelenkkörper können daher die Schlingenpakete, gerade am äußeren Umfang des elastischen Gelenkkörpers, gegenüber herkömmlichen Gelenkkörpern besser abgestützt und ihr Traganteil somit erhöht werden.

Da die benachbarte Buchsen umschlingenden Schlingenpakete des elastischen Gelenkkörpers abwechselnd einer Zug- oder Druckbeanspruchung unterliegen, weil sie einbaubedingt abwechselnd in einer Zugstrecke und Druckstrecke liegen, sind üblicherweise an einem mit einer Druckkraft beanspruchten Abschnitt des elastischen Gelenkkörpers zwei Schlingenpakete angeordnet, während im Gegensatz dazu auf einer Zugstrecke nur ein Schlingenpaket vorgesehen ist. Aus diesem Grund sieht eine Weiterbildung der Erfindung für einen solchen Aufbau des Gelenkkörpers vor, dass in dem Gelenkkörper in Umfangsrichtung aufeinanderfolgende Buchsenpaare wechselweise von einem Schlingenpaketpaar oder einem einzelnen Schlingenpaket umschlungen sind, wobei zwischen zwei von einem Schlingenpaketpaar umschlungenen benachbarten Buchsen wenigstens ein Einlegekörper vorgesehen ist, der Aufnahmebereiche für parallele Stränge des Schlingenpaketpaars aufweist, und wobei zwischen zwei von einem einzelnen Schlingenpaket umschlungenen Buchsen wenigstens ein Einlegekörper vorgesehen ist, der Aufnahmebereiche für parallele Stränge des einzelnen Schlingenpakets aufweist.

Da die Buchsen in Umfangsrichtung in vorbestimmten Winkelabständen bezüglich einer Mittelachse des Gelenkkörpers angeordnet sind, sieht eine Weiterbildung der Erfindung vor, dass eine Mehrzahl von Einlegekörpern ebenfalls in regelmäßigen Winkelabständen angeordnet ist.

Durch die wechselweise Anordnung eines Schlingenpaketpaars und eines einzelnen Schlingenpakets in Abhängigkeit von den mit einer Druckkraft oder Zugkraft beanspruchten Abschnitten des elastischen Gelenkkörpers ist gemäß einer weiteren Ausführungsform der Erfindung zur Aufnahme und Abstützung der Schlingenpakete vorgesehen, dass der wenigstens eine Einlegekörper zwischen den Buchsen Aufnahmebereiche für das Schlingenpaketpaar an seinen Eckbereichen aufweist. Entsprechend ist diesem Zusammenhang bezüglich der Aufnahme eines mit einer Zugkraft belasteten Schlingenpaketes zu erwähnen, dass der Einlegekörper Aufnahmebereiche für ein einzelnes Schlingenpaket in seinem mittleren Bereich aufweist.

Um eine möglichst stabile Abstützung der Schlingenpakete auch im Bereich der Buchsen zu erreichen, sieht die Erfindung vor, dass
die Stützanordnung wenigstens einen einer einzelnen Buchse zugeordneten Stützkörper aufweist. In diesem Zusammenhang kann erfindungsgemäß vorgesehen sein, dass der wenigstens eine einer Buchse zugeordnete Stützkörper wenigstens eine Führungsbahn für wenigstens ein Schlingenpaket aufweist.

Wie vorstehend bereits erwähnt, wird eine Buchse von mehreren, insbesondere drei, Schlingenpaketen umschlungen. Um die einzelnen Schlingenpakete im Bereich der Buchse voneinander zu trennen und somit Lebensdauer reduzierende Reibungswirkungen zwischen den aus gleichem Material hergestellten Schlingenpaketen im Betrieb des erfindungsgemäßen Gelenkkörpers zu verhindern, kann gemäß einer weiteren Ausführungsform der Erfindung vorgesehen sein, dass der wenigstens eine einer Buchse zugeordnete Stützkörper eine obere und eine untere Führungsbahn für eine Schlingenpaketpaar aufweist, wobei der Stützkörper in Richtung der folgenden Buchse des von dem Schlingenpaketpaar umschlungenen Buchsenpaares zwischen der oberen und der unteren Führungsbahn eine mittlere Führungsbahn aufweist und diese teilweise umschließt. In diesem Zusammenhang bleibt zu erwähnen, dass die mittlere Führungsbahn des Stützkörpers ein einzelnes ein Buchsenpaar umschlingendes Schlingenpaket aufnehmen kann. In der mittleren Führungsbahn wird vorzugsweise das mit einer Zugkraft beanspruchte Schlingenpaket aufgenommen, während die beiden Schlingenpakete eines Schlingenpaketpaars in den oberen und unteren Führungsbahnen durch eine Druckkraft beansprucht werden. Die Stützkörper mit den Führungsbahnen trennen somit die mit unterschiedlichen Kräften belasteten Schlingenpakete voneinander.

Hinsichtlich der Abstützung und zum Verhindern von Reibung zwischen benachbarten Schlingenpaketen gleichen Materials aufeinander kann erfindungsgemäß ferner vorgesehen sein, dass der wenigstens eine Stützkörper eine Mehrzahl von Führungsbahnen zumindest teilweise umschließt.

Der Einlegekörper und der Stützkörper sind gemäß einer Ausführungsform der Erfindung vorzugsweise aus Metall, Aluminium, NE-Legierungen, gefüllten oder ungefüllten Kunststoffen oder einem thermoplastischen Elastomer hergestellt. So kann in einer Ausführungsvariante der Erfindung ferner vorgesehen sein, dass der Einlegekörper und der Stützkörper vorzugsweise mit eingebetteten Kohlenstoff-, Glas und/oder Metallfasern verstärkt sind. Die Einlegekörper und Stützkörper können aber auch aus einem Metallgewebe oder aus Gebilden hergestellt sein, die einer komprimierten Metallwolle gleichen, das heißt aus komprimierten Metallfasern. Derartige Einlegeteile haben neben den vorstehend angesprochenen Vorteilen zusätzlich den Vorteil, dass sie weniger steif und dadurch leichter deformierbar sind. Mit anderen Worten sind diese aus Metallgewebe gebildeten Einlegeteile unter Beugung des erfindungsgemäßen elastischen Gelenkkörpers flexibel.

Um die Schlingenpakete bzw. die Stützkörper axial abzustützen und in ihrer vorbestimmten Position auf einer Buchse zu halten, sieht eine weitere Ausführungsform der Erfindung vor, dass an jedem Ende einer Buchse jeweils ein Kragen befestigt ist, der das Schlingenpaket auf der betreffenden Buchse axial abstützt.

Die Erfindung betrifft ferner eine Wellenanordnung mit einem erfindungsgemäßen Gelenkkörper.

Die Erfindung wird im Folgenden beispielhaft anhand der beiliegenden Figuren erläutert. Es stellen dar:
- Fig.1a: eine perspektivische Ansicht einer ersten Ausführungsform der Erfindung;
- Fig.1b: eine Draufsicht der ersten Ausführungsform der Erfindung;
- Fig.1c und 1d: Schnittansichten einer ersten Ausführungsform der Erfindung;
- Fig.2a: eine perspektivische Ansicht einer zweiten Ausführungsform der Erfindung;
- Fig.2b: eine Vorderansicht der zweiten Ausführungsform der Erfindung;
- Fig.2c und 2d: Schnittansichten der zweiten Ausführungsform der Erfindung;
- Fig.3a: eine perspektivische Ansicht einer dritten Ausführungsform der Erfindung;
- Fig.3b: eine Draufsicht der dritten Ausführungsform der Erfindung;
- Fig.3c und 3d: Schnittansichten der dritten Ausführungsform der Erfindung;
- Fig.4a: eine perspektivische Ansicht einer vierten Ausführungsform der Erfindung;
- Fig.4b und 4c: eine Vorderansicht und eine Schnittansicht der vierten Ausführungsform der Erfindung;
- Fig.5a: eine perspektivische Ansicht einer fünften Ausführungsform der Erfindung;
- Fig.5b und 5c: eine Vorderansicht und eine Schnittansicht der fünften Ausführungsform der Erfindung;
- Fig.6a: eine perspektivische Ansicht einer sechsten Ausführungsform der Erfindung;
- Fig.6b und 6c: eine Vorderansicht und eine Schnittansicht der sechsten Ausführungsform der Erfindung;
- Fig.7a: eine perspektivische Ansicht einer siebten Ausführungsform der Erfindung;
- Fig.7b und 7c: eine Vorderansicht und eine Schnittansicht der siebten Ausführungsform der Erfindung;
- Fig.8a und 8b: Ansichten eines einer Buchse zugeordneten Stützkörpers;
- Fig.9a und 9b: Ansichten eines einer Buchse zugeordneten Stützkörpers; und
- Fig.10a und 10b: Ansichten eines einer Buchse zugeordneten Stützkörpers.

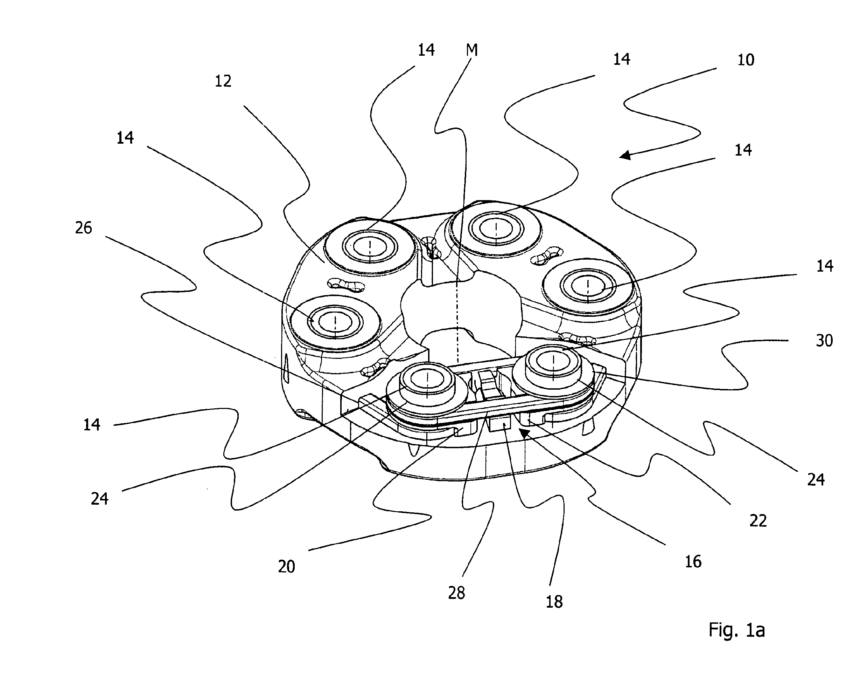

Fig.1a zeigt eine perspektivische Ansicht einer ersten Ausführungsform des erfindungsgemäßen elastischen Gelenkkörpers 10 mit sechs von einer gummielastischen Ummantelung 12 umgebenen Buchsen 14. Die Buchsen 14 sind in Umfangsrichtung bezüglich einer Mittelachse M in vorbestimmten Winkelabständen des Gelenkkörpers 10 angeordnet. In dem im Vordergrund der Zeichnung aufgeschnitten dargestellten Bereich des Gelenkkörpers gemäß Fig.1a erkennt man eine Stützanordnung 16 mit einem Einlegekörper 18 und jeweils einer der Buchsen 14 zugeordneten Stützkörpern 20 und 22. Ferner erkennt man in Fig.1a Kragen 24, die zur axialen Abstützung der Schlingenpakete 26, 28 und 30 an den Buchsen 14 angeordnet sind.

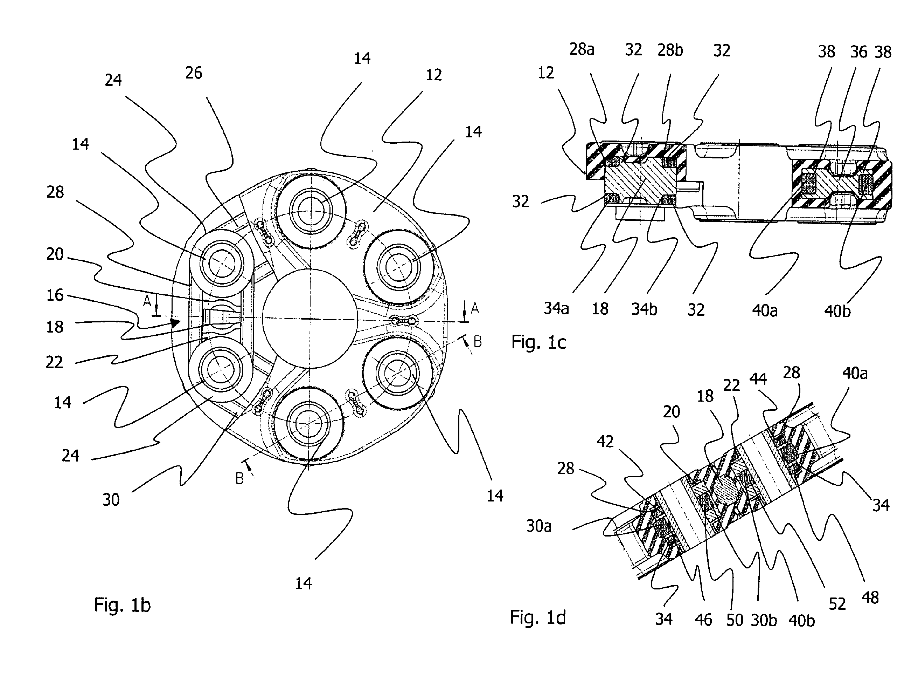

Die Schlingenpakete 26, 28 und 30 werden von später mit Bezug auf Fig. 1d detailliert erläuterten, an den Stützkörpern 20, 22 ausgebildeten Führungsbahnen geführt bzw. aufgenommen. Die Stützkörper 20 und 22, die in Richtung des Einlegekörpers 18 teilweise geschlossen sind, weisen eine Form auf, die mit dem Einlegekörper 18 zu korrespondieren vermag.

Fig.1a zeigt zudem, dass eine einzelne Buchse 14 jeweils von mehreren Schlingenpaketen 26, 28 umschlungen ist. Dabei kann vorgesehen sein, dass das Schlingenpaket 26, 30 im in eine Wellenanordnung eingebauten Zustand des Gelenkkörpers 10 durch eine Zugkraft beansprucht wird, während das Schlingenpaket 28 und ein in Figur 1a nicht gezeigtes in der Gummiummantelung 12 eingebettetes paralleles Schlingenpaket durch eine Druck- bzw. Schubkraft belastet wird.

Fig.1b zeigt eine Draufsicht auf den elastischen Gelenkkörper 10 gemäß Fig.1a. Dort erkennt man wiederum die Stützanordnung 16 mit dem Einlegekörper 18 und die jeweils einer Buchse 14 zugeordneten Stützkörper 20 bzw. 22. Der Einlegekörper 18 gemäß dieser Ausführungsform der Erfindung weist einen konvex gewölbten Mittelteil auf, der korrespondierend zu einem konkaven Teil der Stützkörper 20 und 22 ausgebildet ist. Wird das Schlingenpaket 28 nun auf Druck bzw. Schub beansprucht, weil es in einer Druckstrecke eingebaut ist, so bewegen sich der Stützkörper 22, der Einlegekörper 18 und der Stützkörper 20 aufeinander zu. Durch die konkave Ausbildung des Einlegekörpers 18 sind aber Relativbewegungen dieser Komponenten zueinander möglich. Dadurch kann der Gelenkkörper 10 an vorbestimmte Beugewinkelanforderungen für den Fall einer kardanischen Beanspruchung angepasst werden und ein Abrollen durch Zusammenwirken der Stützkörper 20, 22 mit dem Einlegekörper 18 um die Mittelachse des Gelenkkörpers wird erleichtert.

Fig.1c zeigt eine Schnittansicht gemäß der Schnittlinie A-A aus Fig.1b. Der Einlegekörper 18 weist in seinen Eckbereichen Aufnahmebereiche 32 für die parallelen Stränge des Schlingenpaketpaars 28, 34 auf, wobei in seinen oberen Eckbereichen die parallelen Stränge 28a, 28b des Schlingenpakets 28 aufgenommen sind und in seinen unteren Eckbereichen die parallelen Stränge 34a und 34b des Schlingenpakets 34. Im Gegensatz hierzu weist der Einlegekörper 36 nur zwei Aufnahmebereiche 38 für die parallelen Stränge 40a, 40b des Schlingenpakets 40 in seinem mittleren Bereich auf. Das Schlingenpaketpaar 28, 34 wird, wie bereits vorstehend erwähnt, auf Druck- bzw. Schub belastet, wohingegen das von dem Einlegekörper 36 aufgenommene Schlingenpaket 40 auf Zug beansprucht wird und dementsprechend im Querschnitt größer dimensioniert ist.

Fig.1d ist eine Schnittansicht entlang der Schnittlinie B-B aus Fig.1b und zeigt den Einlegekörper 18 mit seinem konkav ausgewölbten mittleren Bereich sowie die Stützkörper 20 und 22. Die Stützkörper 20 und 22 weisen jeweils eine an ihnen ausgebildete obere Führungsbahn 42 und 44 auf, die zusammen das Schlingenpaket 28 führen bzw. aufnehmen. In unteren Führungsbahnen 46, 48 des Stützkörpers 20 und 22 wird ebenfalls das Schlingenpaket 34 des Schlingenpaketpaares 28, 34 geführt oder aufgenommen. Zwischen diesen genannten oberen und unteren Führungsbahnen sind an den Stützkörpern 20, 22 entsprechende mittlere Führungsbahnen 50, 52 ausgebildet. Die einzelnen Führungsbahnen sind durch Materialstege der Stützkörper 20 und 22 voneinander getrennt, so dass die darin aufgenommenen Schlingenpakete nicht in gegenseitigen Kontakt kommen. Dadurch kann reibungsbedingter Verschleiß minimiert werden.

Unter Führungsbahnen sind in diesem Zusammenhang die Abschnitte der Stützkörper 20, 22 zu verstehen, in denen die einzelnen Schlingenpakete um die Buchsen 14 herum geführt sind und zugleich abgestützt werden. Wie vorstehend erwähnt sind die Führungsbahnen durch Materialstege voneinander getrennt, welche somit auch die einzelnen Schlingenpakte voneinander trennen, wodurch Reibungswirkungen zwischen aufeinander liegenden Schlingenpaketen verhindert werden. Durch die Führungsbahnen und die diesen zugeordneten Materialstege können die Schlingenpakete auch im äußeren Umfangsbereich der Buchse 14 abgestützt werden. Dadurch kann der Traganteil der einzelnen Schlingenpakete in diesem Bereich deutlich erhöht werden. Des weiteren wird ersichtlich, dass die Führungsbahnen 42, 44, 46, 48 an den Stützkörpern 20, 22 ein in einer Druckstrecke angeordnetes Schlingenpaketpaar 28, 34 aufnehmen und die mittleren Führungsbahnen 50, 52 der Stützköper 20, 22 auf Zug beanspruchte Schlingenpakete 30, 40 aufnehmen. Somit trennen die Führungsbahnen unterschiedlich belastete Schlingenpakete voneinander.

Die mittlere Führungsbahn 50 des Stützkörpers 20 nimmt die parallelen Stränge 30a, 30b des Schlingenpakets 30 auf, und die Führungsbahn 52 des Stützkörpers 22 nimmt die parallelen Stränge 40a, 40b des Schlingenpakets 40 auf. Ferner erkennt man, dass der Stützkörper 20 in Richtung des Einlegekörpers 18 geschlossen ist und somit auch den Strang 30b des Schlingenpakets 30 umschließt. Gleiches gilt für den Stützkörper 22, der den Strang 40a mit seiner geschlossenen Seite umschließt. Dieser geschlossene Bereich der Stützkörper 20, 22 kann entsprechend der Form der Einlegekörper 18 geformt werden, wodurch ein vorteilhaftes Zusammenwirken dieser beiden Komponenten ermöglicht wird.

Zusätzlich zeigt Fig.1d die Kragen 24, die die Schlingenpakete bzw. die Stützkörper 20, 22 axial abstützen bzw. in ihrer vorbestimmten Position auf der Buchse 14 halten.

Im Folgenden wird auf die Funktion des Gelenkkörpers mit einer erfindungsgemäßen Stützanordnung 16 eingegangen. Der elastische Gelenkkörper 10 wird in bekannter Weise wechselseitig an zu verbindenden Wellenabschnitten angebracht. Wie voranstehend bereits mehrfach erwähnt, werden die Schlingenpakete durch unterschiedliche Kräfte beansprucht. Bei der Stützanordnung 16 mit dem Einlegekörper 18 und den Stützkörper 20 und 22 zur Abstützung des mit einer Druckkraft beanspruchten Schlingenpaketpaares 28, 34, wird sich im Betrieb der Stützkörper 22 an den Einlegekörper 18 durch eine Komprimierung der gummielastischen Ummantelung 12 annähern, gleiches gilt für den Einlegeköper 18, der sich an den Stützkörper 20 annähert. Da ein elastischer Gelenkkörper 10 im Betrieb oftmals zusätzlich zu einer reinen Drehmomentübertragung noch kardanisch belastet wird und deshalb einem gewissen Beugewinkel ausgesetzt ist, der durch einen Versatz oder Beugewinkel zwischen den zu verbindenden Wellenabschnitten entsteht, sind die Schlingenpakete gerade am äußeren Umfang des Gelenkkörpers 10 stärker beansprucht. Erfindungsgemäß werden die Schlingenpakete aber durch die Stützanordnung 16 abgestützt, so dass ihr Traganteil deutlich erhöht wird.

Im Folgenden werden mit Bezug auf die weiteren Figuren weitere Ausführungsbeispiele der Erfindung erläutert. Zur Vermeidung von Wiederholungen und zur Vereinfachung der Beschreibung werden für gleichwirkende oder gleichartige Komponenten dieselben Bezugszeichen verwendet, wie im ersten Ausführungsbeispiel, jedoch mit einer fortlaufenden Ziffer vorangestellt.

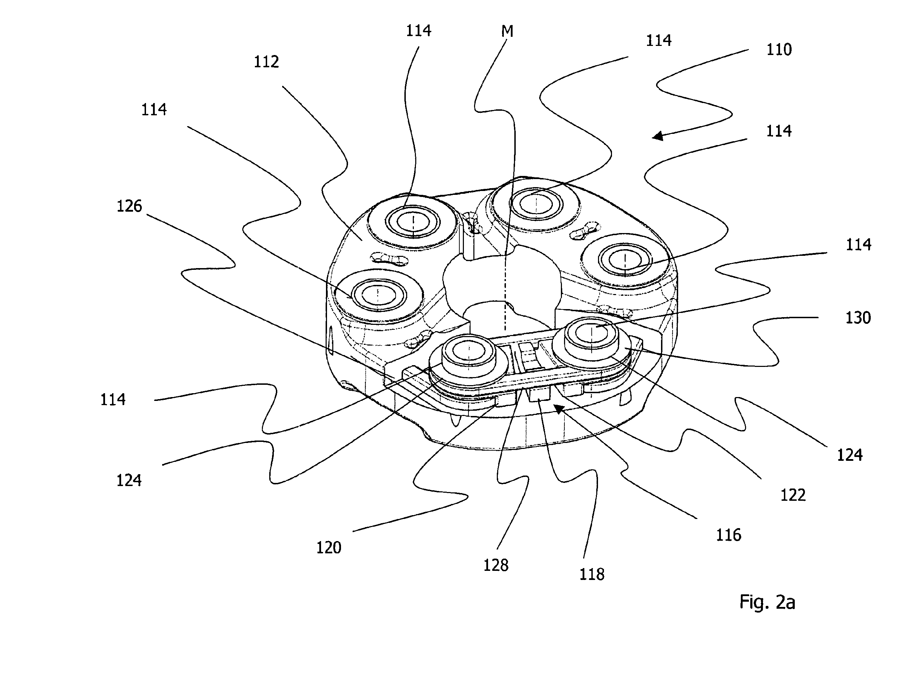

Fig.2a zeigt den erfindungsgemäßen Gelenkkörper 110 mit einer Stützanordnung 116, die einen Einlegekörper 118 und den entsprechenden Buchsen 114 zugeordnete Stützkörper 120 und 122 aufweist. Die Ausführungsform gemäß Fig. 2a bis 2d unterscheidet sich von der ersten Ausführungsform gemäß der Fig.1a bis 1d lediglich darin, dass der Einlegekörper 118 sowie die beiden Stützkörper 120, 122 eine andere Form aufweisen, als sie für das erste Ausführungsbeispiel beschrieben wurde.

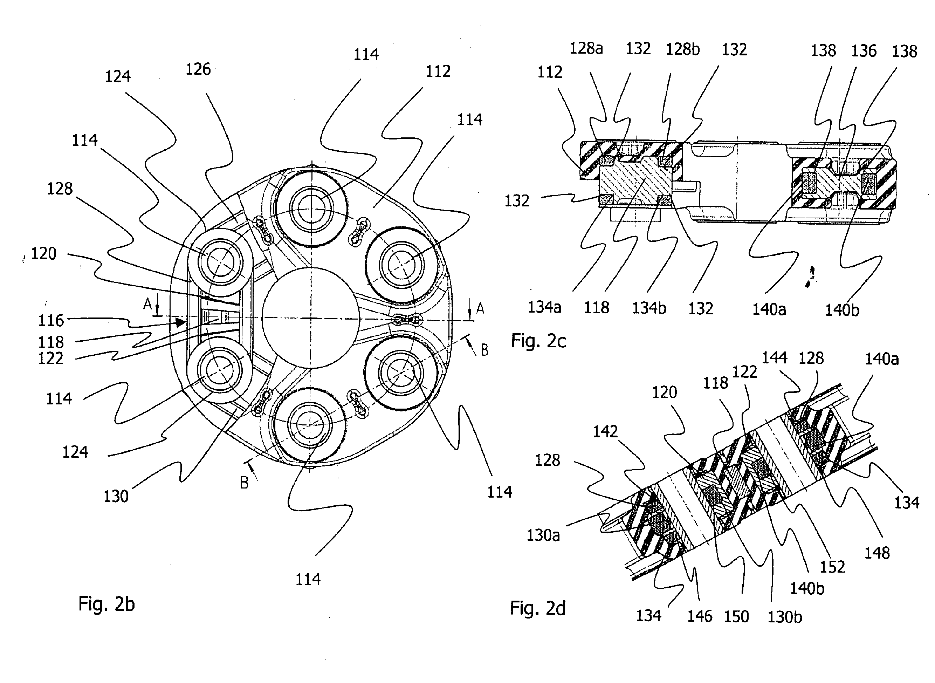

Aus Fig.2b erkennt man, dass der Einlegekörper 118 eine sich zur Mittelachse M verjüngende Keilform aufweist. Dementsprechend weisen die Stützkörper 120 und 122 eine angepasst abgeschrägte Form auf, die mit der Form des Einlegekörpers 118 zu korrespondieren vermag. Durch die abgeschrägte Form der Stützkörper 120, 122 und der Keilform des Einlegekörpers 120 kann ein Abrollen des Einlegekörpers 118 in axialer Richtung um den Mittelpunkt des Gelenkkörpers 110 erleichtert werden.

Fig.2c zeigt eine Schnittansicht entlang der Schnittlinie A-A aus Fig.2b. Wiederum erkennt man Aufnahmebereiche 132 des Einlegekörpers 118 für das Schlingenpaketpaar 128, 134 und den Einlegekörper 136 mit Aufnahmebereichen für die parallelen Stränge 140a, 140b des Schlingenpakets 140.

Aus Fig.2d erkennt man, dass im Gegensatz zum Ausführungsbeispiel gemäß der Fig.1a bis 1d der Einlegekörper 118 eine rechteckige Keilform ohne Ausbauchungen in seinem mittleren Bereich aufweist.

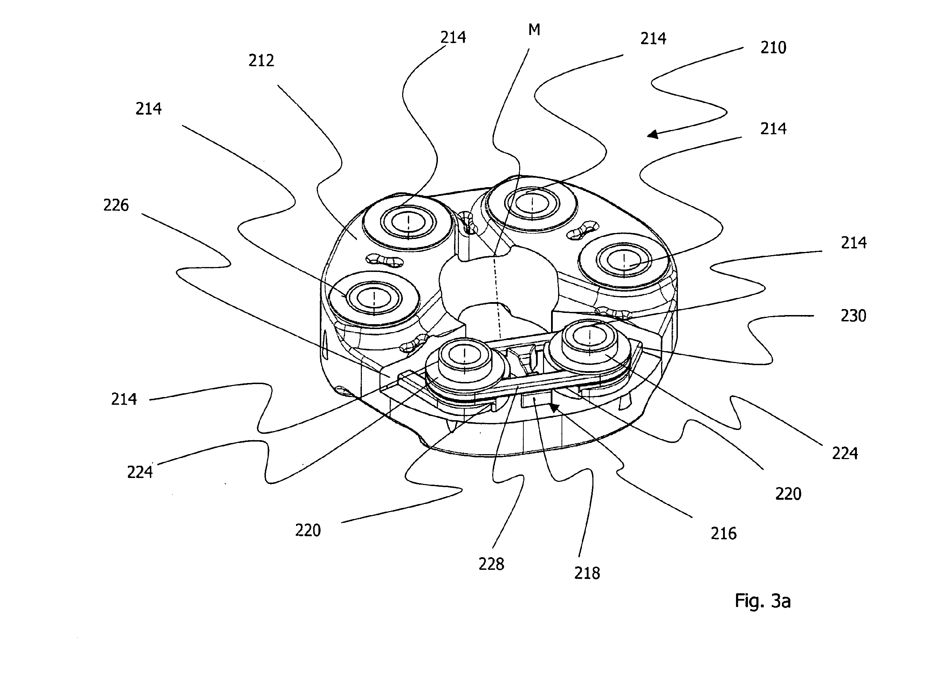

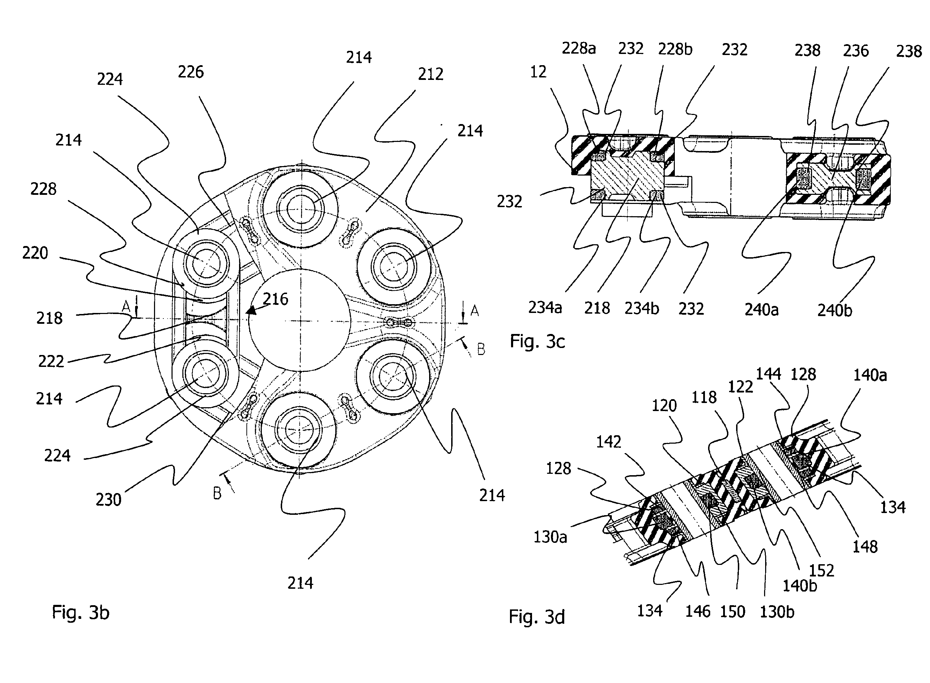

Fig.3a zeigt ein drittes Ausführungsbeispiel des erfindungsgemäßen elastischen Gelenkkörpers 210 mit der Stützanordnung 216. Die Stützanordnung 216 weist wie die vorhergehenden Ausführungsbeispiele einen Einlegekörper 218 sowie Stützkörper 220, 222 auf. Die Stützkörper 220 und 222 sind in einer an die Buchsen 214 angepassten runden Form ausgebildet und der Einlegekörper 218 ist entsprechend konkav gewölbt, so dass er zu der Geometrie der Stützkörper 220, 222 korrespondiert.

Fig.3b bis 3d zeigen den elastischen Gelenkkörper 210 mit denselben Komponenten, wie bei den voranstehenden Ausführungsformen beschrieben, allerdings ausgeführt mit der bereits beschriebenen Stützanordnung 216, die sich in der Geometrie von den vorangehenden Stützanordnungen unterscheidet.

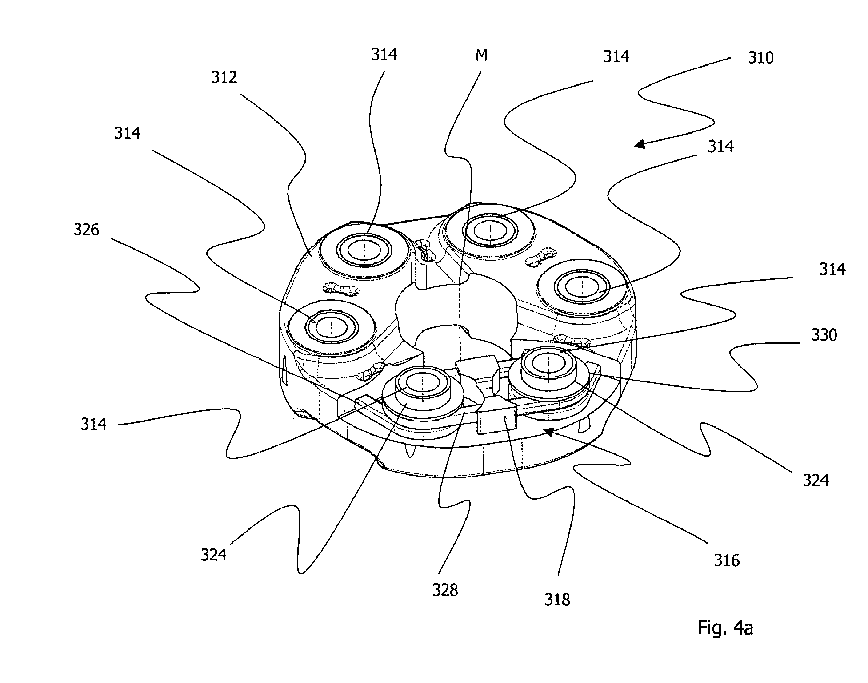

Fig.4a zeigt den erfindungsgemäßen elastischen Gelenkkörper 310 mit einer Stützanordnung 316, die im Gegensatz zu den vorhergehend beschriebenen Ausführungsbeispielen nur noch von einem Einlegekörper 318 gebildet wird. Der Einlegekörper 318 ist zwischen zwei benachbarten Buchsen 314 angeordnet und umschließt das Schlingenpaket 328 bzw. wird von diesem durchdrungen.

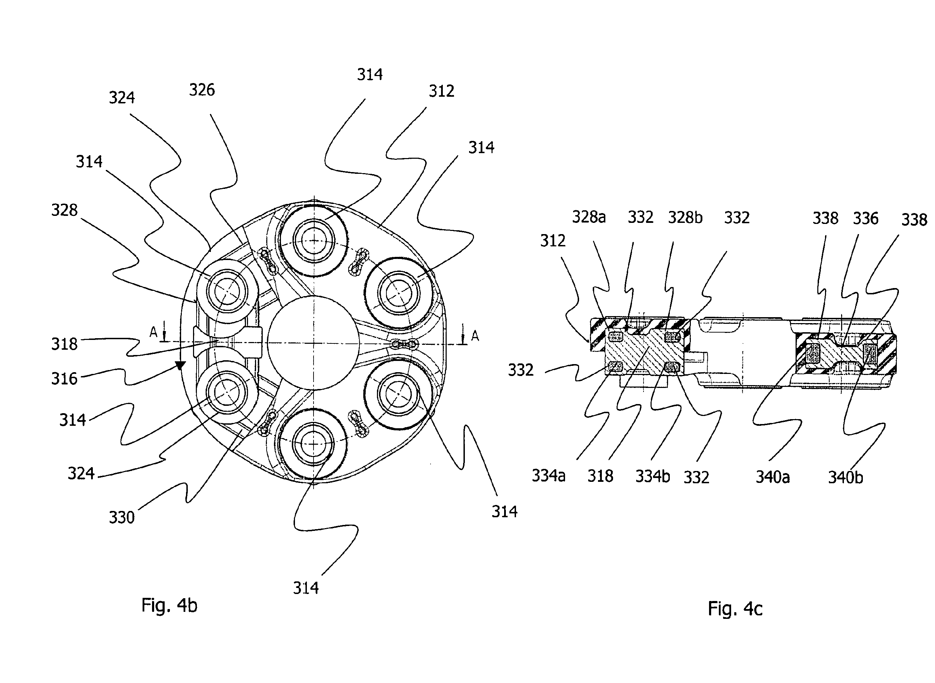

Fig.4b zeigt wiederum eine Draufsicht des elastischen Gelenkkörpers 310 mit dem Einlegekörper 318, der konkav geformte Ausbuchtungen aufweist, so dass er zu der Geometrie der Buchsen 314 bzw. der die Buchsen 314 umschlingenden Schlingenpaketen korrespondiert.

Aus der Schnittansicht gemäß Fig.4c kann man deutlich erkennen, dass der Einlegekörper 318 von den parallelen Strängen 328a, 328b des Schlingenpakets 328 bzw. von den parallelen Strängen 334a, 334b des Schlingenpakets 334 durchdrungen wird. Der Einlegekörper 336, der ein auf Zug beanspruchtes Schlingenpaket 340 mit den parallelen Strängen 340a, 340b aufnimmt, weist, wie bei dem vorhergehenden Ausführungsbeispiel bereits erwähnt, in seinem mittleren Abschnitt Aufnahmebereiche 338 für die erwähnten parallelen Stränge des Schlingenpakets 340 auf.

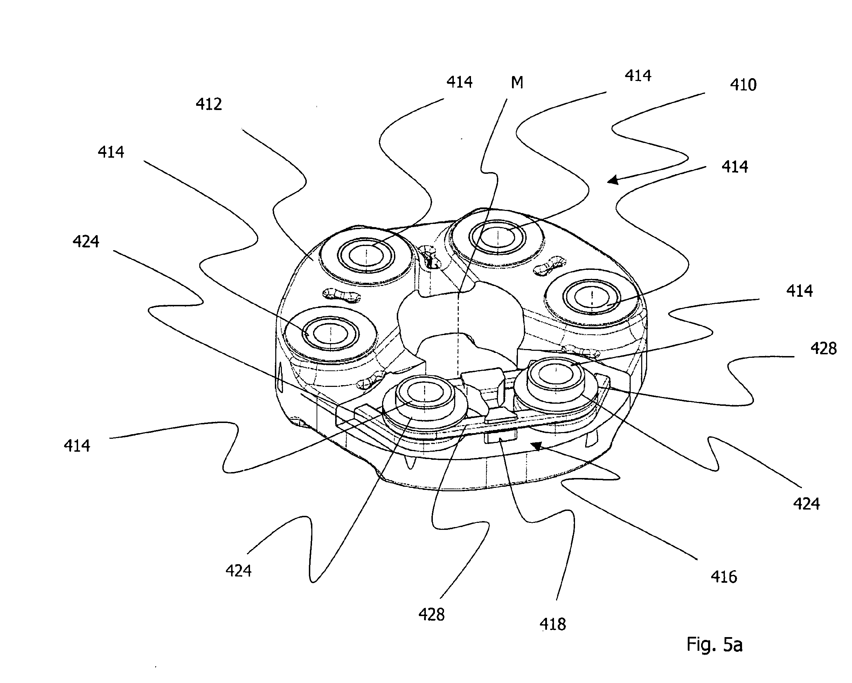

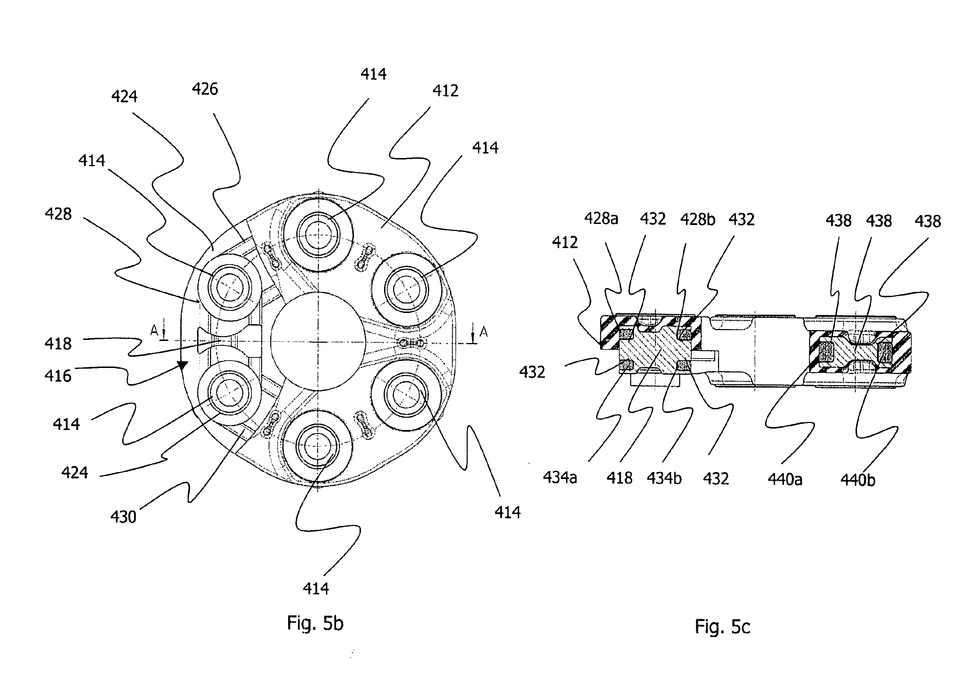

Fig.5a bis 5c zeigen ein weiteres Ausführungsbeispiel der vorliegenden Erfindung, bei dem an dem Einlegekörper 418 nutähnliche Aufnahmebereiche 432 für die parallelen Stränge des Schlingenpaketpaars 428, 434 vorgesehen sind. Der in der Zugstrecke eingelegte Einlegekörper 438 weist wiederum in seinem mittleren Bereich Aufnahmebereiche 438 für die parallelen Stränge 440a, 440b des Schlingenpakets 440 auf.

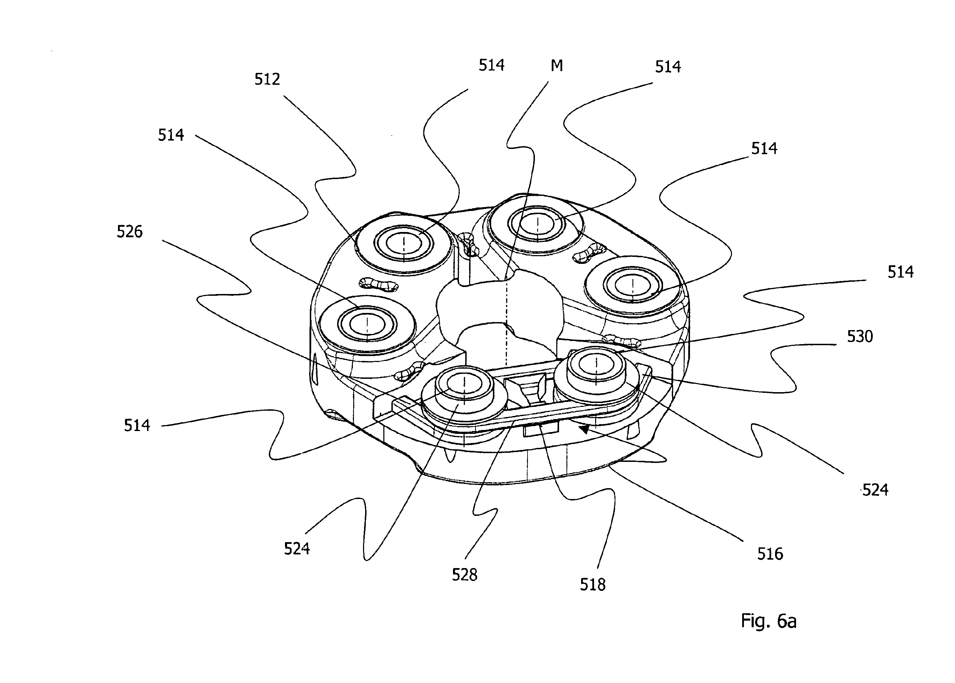

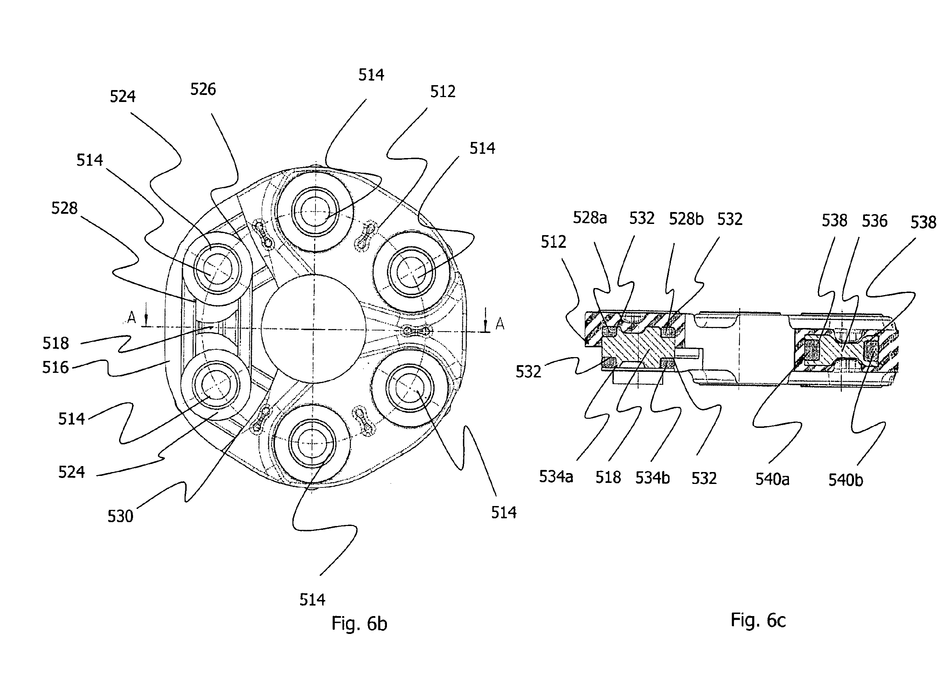

Aus Fig.6a bis 6c, die eine weitere Ausführungsform der Erfindung darstellen, erkennt man, dass der Einlegekörper 518 gemäß dieser Ausführungsform der Erfindung in seinem Zentrum mit einer Einschnürung und somit etwas schmaler ausgebildet ist und sich zu seinem Rand hin etwas verbreitert. An seinen Eckbereichen weist der Einlegekörper 518 Aufnahmebereiche 538 für die parallelen Stränge des Schlingenpaketpaars 528, 532 auf.

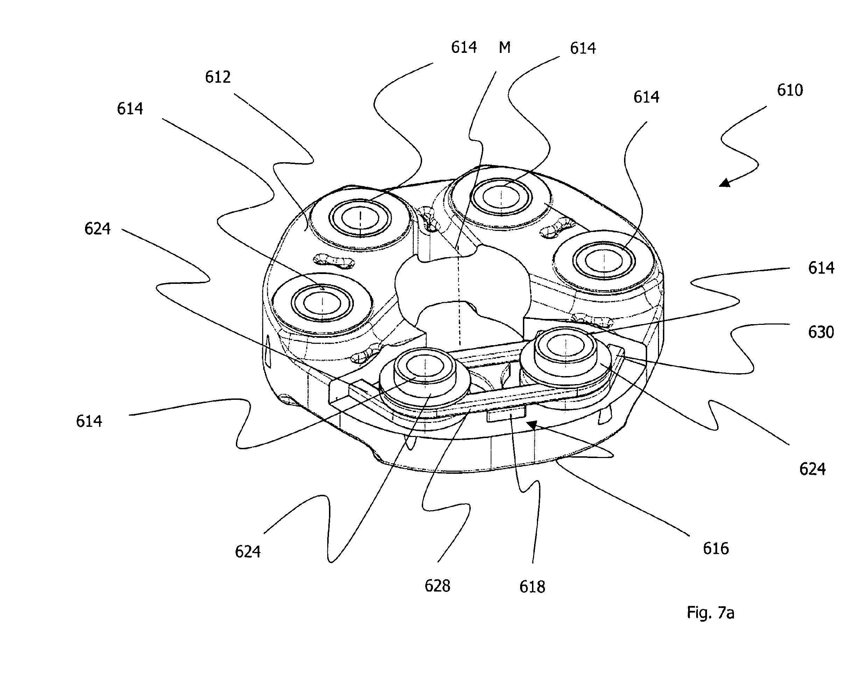

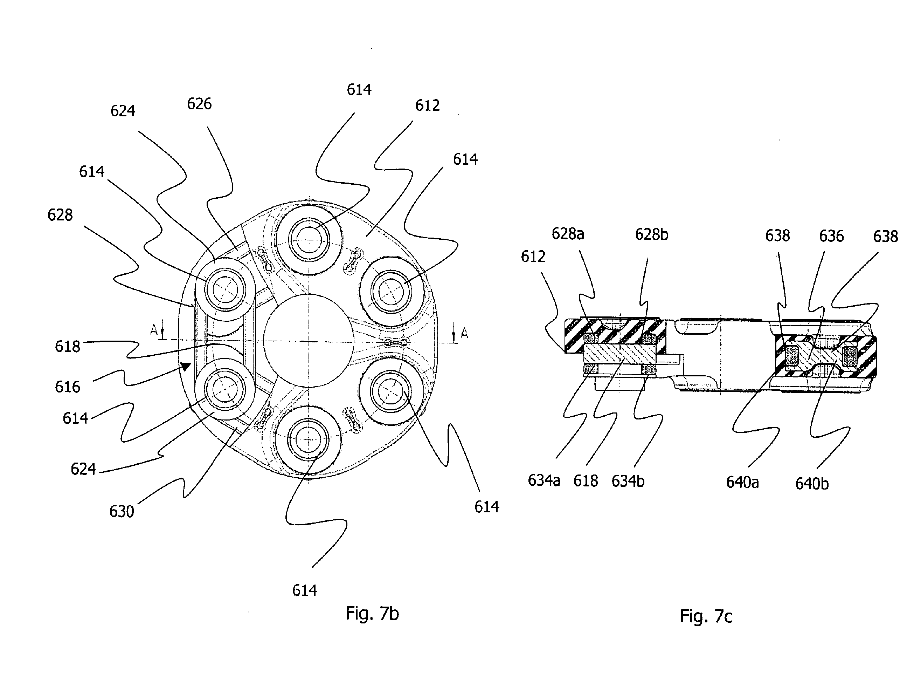

Die Ausführungsform gemäß Fig.7a bis 7c zeigt einen Einlegekörper 618, an den sich die parallelen Stränge des Schlingenpaketpaars 628, 634 an zu der Mittelachse M im Wesentlichen orthogonal verlaufende Oberflächen anlegen können, d.h. das der Einlegekörper 618 wird konstruktiv so ausgebildet, dass er zwischen die parallelen Stränge des Schlingenpaketpaares 628 und 634 eingelegt werden kann. Der Einlegekörper 618 stützt die Schlingenpakete, insbesondere bei einer kardanischen Beanspruchung, ab und versteift zudem den elastischen Gelenkkörper.

Im Folgenden werden weitere konstruktive Gestaltungsmöglichkeiten für einen Stützkörper erläutert. Hierzu ist vorab zu erwähnen, dass die einzelnen Stützkörper und die Führungsbahnen bzw. deren Abschnitte zwischen den verschiedenen Schlingenpaketen entsprechend den zu übertragenden Drehmomenten und der darausfolgenden Dimensionierung des elastischen Gelenkkörpers entsprechend größer bzw. stärker ausgebildet werden können. Dies gilt auch für die vorstehend bereits beschriebenen Ausführungsbeispiele.

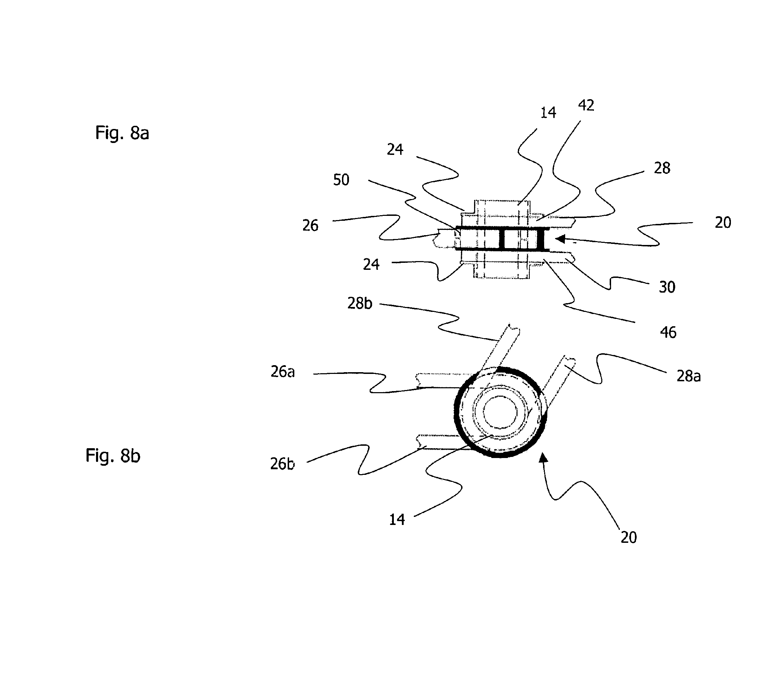

Fig.8a und 8b zeigen einen Stützkörper 20 mit einer oberen Führungsbahn 42 für das Schlingenpaket 28, einer unteren Führungsbahn 46 zur Führung des Schlingenpakets 30 sowie einer zwischen diesen Führungsbahnen angeordneten mittleren Führungsbahn 50 für das Schlingenpaket 26. Der Stützkörper gemäß den Fig. 8a und 8b ist offen ausgebildet, das heißt er umschließt die Schlingenpakete nicht vollständig.

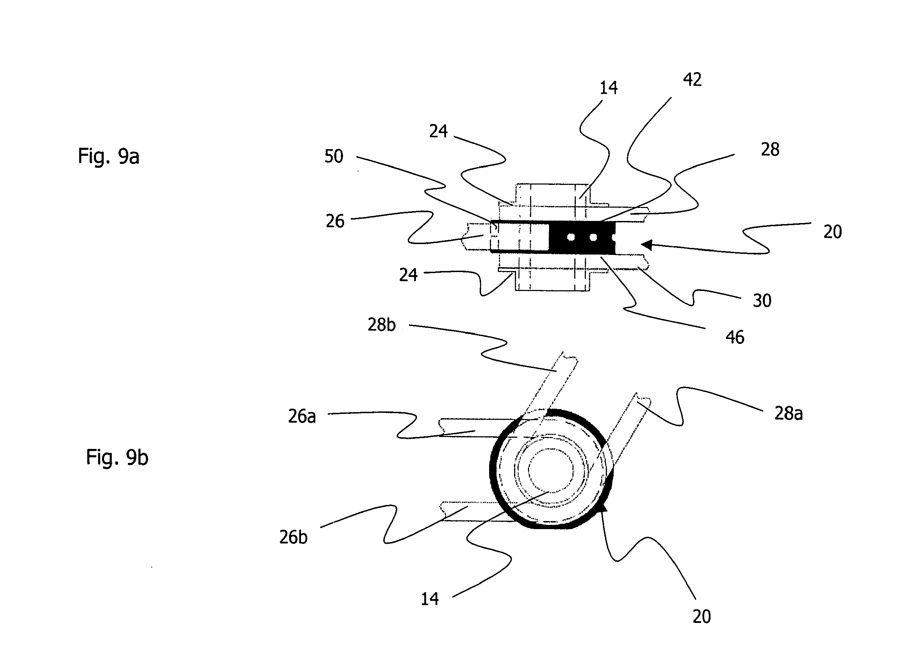

Fig.9a und Fig.9b zeigen einen Stützkörper 20, der die mittlere Führungsbahn 50 zwischen dem auf Druck beanspruchten Schlingenpaketpaar 28, 30 teilweise umschließt. Dort, wo das auf Druck beanspruchte Schlingenpaket die in dem Stützkörper 20 angeordnete Buchse 14 verlässt, ist dieses Schlingenpaket nicht mehr umschlossen. Die beiden auf Druck beanspruchten Schlingenpakete 28 und 34 sind überhaupt nicht umschlossen.

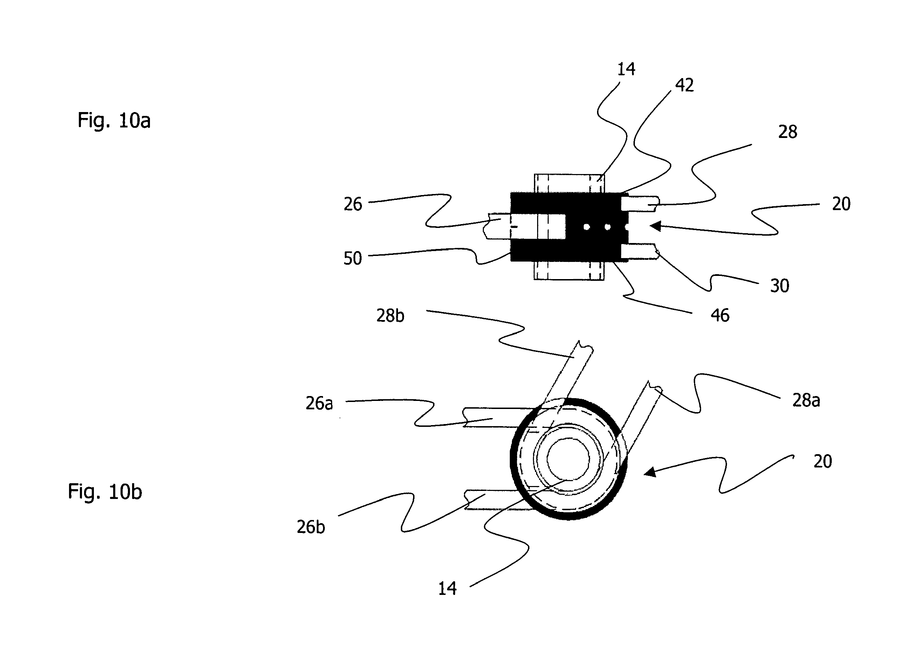

Fig.10a und Fig.10b zeigen hingegen einen Stützkörper 20, der die Führungsbahnen 42, 46 und 52 sowie sämtliche Schlingenpakete 28, 30, 32 teilweise an ihren äußeren die Buchsen umschlingende Umfang umschließt.

Hinsichtlich der Herstellung der Stützanordnung mit Einlegekörpern und Stützkörpern bleibt zu erwähnen, dass entweder die Einlegekörper in eine Form eingelegt und anschließend mit einem gummielastischen Material umspritzt werden oder zunächst ein Kunststoffgerüst vorgespritzt und anschließend mit gummielastischen Material ummantelt wird.

Die vielfältigen Ausführungsbeispiele der Erfindung zeigen allesamt Möglichkeiten, die einzelnen Schlingenpakete relativ zueinander abzustützen, gegenseitigen Kontakt der Schlingenpakete in solchen Bereichen, wo Relativbewegungen auftreten können, insbesondere in buchsennahen Bereichen, zu vermeiden, um die Lebensdauer verkürzende Reibeffekte zu unterbinden, und um die Drehmomentübertragungseigenschaften von entsprechend gestalteten Gelenkkörper zu verbessern.

## Patentansprüche

1. Elastischer Gelenkkörper (10) für eine Wellenanordnung zum gelenkigen Verbinden zweier Wellenabschnitte mit
- einer Mehrzahl von Buchsen (14), die in Umfangsrichtung in vorbestimmten Winkelabständen bezüglich einer Mittelachse (M) des Gelenkkörpers (10) angeordnet sind,
- einer Mehrzahl von Schlingenpaketen (26, 28, 30), wobei jedes Schlingenpaket (26, 28, 30) jeweils zwei benachbarte Buchsen (14) umschlingt, und
- einer gummielastischen Ummantelung (12), in die sämtliche Schlingenpakete (26, 28, 30) und Buchsen (14) zumindest teilweise eingebettet sind, wobei
eine Stützanordnung (16) zumindest teilweise in die gummielastische Ummantelung (12) eingebettet ist, wobei die Stützanordnung (16) wenigstens einen Teil eines Schlingenpakets (26, 28, 30) zwischen einander benachbarten Buchsen (14) stützt, wobei die wenigstens eine Stützanordnung (16) einen zwischen zwei benachbarten Buchsen (14) angeordneten Einlegekörper (18, 36)
**dadurch gekennzeichnet, dass**
die wenigstens eine Stützanordnung (16) wenigstens einen einer einzelnen Buchse (14) zugeordneten Stützkörper (20,22) aufweist,
wobei der Einlegekörper (18,36) im Abstand zu den Buchsen (14) und dem den Buchsen (14) zugeordneten Stützkörper (20,22) angeordnet ist,
und wobei der Stützkörper (20,22) auf einer Buchse (14) zwischen zwei Kragen (24) angeordnet ist.

2. Gelenkkörper (10) nach Anspruch 1,
**dadurch gekennzeichnet, dass** einander benachbarte Buchsen (14) paarweise von wenigstens einem der Schlingenpakete (26, 28, 30) umschlungen sind, wobei die Stützanordnung (16) eine Führung für das wenigstens eine der Schlingenpakete (26, 28, 30) bildet.

3. Gelenkkörper (10) nach Anspruch 1 oder 2,
**dadurch gekennzeichnet, dass** der wenigstens eine Einlegekörper (18, 36) Aufnahmebereiche (32, 38) für parallele Stränge wenigstens eines Schlingenpakets (26, 28, 30) aufweist.

4. Gelenkkörper (10) nach einem der Ansprüche 1 bis 3,
**dadurch gekennzeichnet, dass** in dem Gelenkkörper (10) in Umfangsrichtung aufeinanderfolgende Buchsenpaare (14) wechselweise von einem Schlingenpaketpaar (28, 34) oder einem einzelnen Schlingenpaket (40) umschlungen sind, wobei zwischen zwei von einem Schlingenpaketpaar (28, 34) umschlungenen benachbarten Buchsen (14) wenigstens ein Einlegekörper (18) vorgesehen ist, der Aufnahmebereiche (32) für parallele Stränge (28a,28b, 34a, 34b) des Schlingenpaketpaars (28, 34) aufweist, und wobei zwischen zwei von einem einzelnen Schlingenpaket (40) umschlungenen Buchsen (14) wenigstens ein Einlegekörper (36) vorgesehen ist, der Aufnahmebereiche (38) für parallele Stränge des einzelnen Schlingenpaket (40a, 40b) aufweist.

5. Gelenkkörper (10) nach einem der Ansprüche 2 bis 4,
**dadurch gekennzeichnet, dass** eine Mehrzahl von Einlegekörpern (18, 36) in regelmäßigen Winkelabständen angeordnet ist.

6. Gelenkkörper (10) nach einem der Ansprüche 4 oder 5,
**dadurch gekennzeichnet, dass** der wenigstens eine Einlegekörper (18) zwischen den Buchsen (14) an seinen Eckbereichen Aufnahmebereiche (32) für das Schlingenpaketpaar (28, 34) aufweist.

7. Gelenkkörper (10) nach einem der Ansprüche 2 bis 5,
**dadurch gekennzeichnet, dass** der Einlegekörper (36) Aufnahmebereiche (38) für ein einzelnes Schlingenpaket (40) in seinem mittleren Bereich aufweist.

8. Gelenkkörper (10) nach Anspruch 7,
**dadurch gekennzeichnet, dass** der wenigstens eine einer Buchse (14) zugeordnete Stützkörper (20, 22) wenigstens eine Führungsbahn (42, 44, 46, 48, 50, 52) wenigstens eines Schlingenpakets (28, 34, 40) aufweist.

9. Gelenkkörper (10) nach Anspruch 8,
**dadurch gekennzeichnet, dass** der wenigstens eine einer Buchse (14) zugeordnete Stützkörper (20, 22) eine obere und eine untere Führungsbahn (42, 46) für ein Schlingenpaketpaar (28, 34) aufweist, wobei der Stützkörper (20, 22) in Richtung der folgenden Buchse des von dem Schlingenpaketpaar (28, 34) umschlungenen Buchenspaares zwischen der oberen und unteren Führungsbahn (42, 44, 46, 48) eine mittlere Führungsbahn (50, 52) aufweist und diese teilweise umschließt.

10. Gelenkkörper (10) nach Anspruch 9,
**dadurch gekennzeichnet, dass** die mittlere Führungsbahn (50, 52) des Stützkörpers (20, 22) ein einzelnes ein Buchsenpaar (14) umschlingendes Schlingenpaket (28, 34, 40) aufnimmt.

11. Gelenkkörper (10) nach Anspruch 10,
**dadurch gekennzeichnet, dass** der wenigstens eine Stützkörper (20, 22) eine Mehrzahl von Führungsbahnen (42, 44, 46, 48, 50, 52) zumindest teilweise umschließt.

12. Gelenkkörper (10) nach einem der vorangehenden Ansprüche,
**dadurch gekennzeichnet, dass** der Einlegekörper (18, 36) oder/und der Stützkörper (20, 22) vorzugsweise aus Metall, Metallgewebe, Metallwolle, insbesondere aus Aluminium, NE-Legierungen, aus gefüllten oder ungefüllten Kunststoffen oder einem thermoplastischen Elastomer hergestellt ist.

13. Gelenkkörper (10) nach Anspruch 12,
**dadurch gekennzeichnet, dass** der Einlegekörper (18, 36) und der Stützkörper (20, 22) vorzugsweise mit eingebetteten Kohlenstoff-, Glas und/oder Metallfasern verstärkt sind.

14. Gelenkkörper (10) nach einem der vorangehenden Ansprüche,
**dadurch gekennzeichnet, dass** an jedem Ende einer Buchse (14) jeweils ein Kragen (24) befestigt ist, der das Schlingenpaket (28, 34, 40) auf der betreffenden Buchse (14) axial abstützt.

15. Wellenanordnung mit einem Gelenkkörper (10) nach einem der Ansprüche 1 bis 14.

## Claims

1. An elastic joint body (10) for a shaft arrangement for the articulated connection of two shaft sections, comprising:
- a plurality of bushings (14) which are arranged in the circumferential direction in predetermined angular intervals with respect to a centre axis (M) of the joint body (10),
- a plurality of loop packets (26, 28, 30), with each loop packet (26, 28, 30) wrapping around two adjacent bushings (14) each, and
- a rubber-elastic casing (12) in which the loop packets (26, 28, 30) and the bushings (14) are at least partially embedded, wherein
one support arrangement (16) is at least partially embedded in the rubber-elastic casing (12), with the support arrangement (16) supporting at least a part of a loop packet (26, 28, 30) between adjacent bushings (14), wherein the at least one support arrangement (16) comprises an insert body (18, 36) which is arranged between two adjacent bushings (14)
**characterised in that** the at least one support arrangement (16) comprises at least one support body (20, 22) which is allocated to a single bushing (14),
wherein the insert body (18, 36) is arranged at a distance from the bushing (14) and the support body (20, 22) which is allocated to the bushings (14),
and wherein the support body (20, 22) is arranged on one bushing (14) between two collars (24).

2. The joint body (10) according to Claim 1,
**characterised in that** adjacent bushings (14) are surrounded in pairs by at least one of the loop packets (26, 28, 30), with the support arrangement (16) forming a guide for the at least one of the loop packets (26, 28, 30).

3. The joint body (10) according to Claim 1 or 2,
**characterised in that** the at least one insert body (18, 36) comprises reception areas (32, 38) for parallel strands of at least one loop packet (26, 28, 30).

4. The joint body (10) according to one of Claims 1 to 3,
**characterised in that** in the joint body (10) successive bushing pairs (14) are alternately surrounded by a loop packet pair (28, 34) or an individual loop packet (40) in the circumferential direction, with at least one insert body (18) being provided between two adjoining bushings (14) which are surrounded by a loop packet pair (28, 34), which comprises reception areas (32) for parallel strands of the loop packet pair (28, 34), and wherein between two bushings which are surrounded by a single loop packet (40) at least one insert body is provided which comprises reception areas (32) for parallel strands (28a, 28b, 34a, 34b) of the loop packet pair (28, 34) and wherein between two bushings (14) which are surrounded by a single loop packet (40) at least one insert body (36) is provided which comprises reception areas (38) for the parallel strands of the single loop packet (40a, 40b).

5. The joint body (10) according to one of Claims 2 to 4,
**characterised in that** a plurality of insert bodies (18, 36) is arranged in regular angular intervals.

6. The joint body (10) according to one of Claims 4 or 5,
**characterised in that** the at least one insert body (18) between the bushings (14) comprises reception areas (32) at its corner areas for the loop packet pair (28, 34).

7. The joint body (10) according one of Claims 2 to 5,
**characterised in that** the insert body (36) comprises reception areas (38) in its central portion for a single loop packet (40).

8. The joint body (10) according to Claim 7,
**characterised in that** the at least one support body (20, 22) which is allocated to a bushing (14) comprises at least one guideway (42, 44, 46, 48, 50, 52) of at least one loop packet (28, 34, 40).

9. The joint body (10) according to Claim 8,
**characterised in that** the at least one support body (20, 22) which is allocated to a bushing (14) comprises an upper and a lower guideway (42, 46) for a loop packet pair (28, 34), with the support body (20, 22) in the direction of the following bushing of the bushing pair which is surrounded by the loop packet pair (28, 34) comprising a centre guideway (50, 52) between the upper and lower guideway (42, 44, 46, 48), partially encompassing same.

10. The joint body (10) according to Claim 9,
**characterised in that** the centre guideway (50, 52) of the support body (20, 22) accommodates a single loop packet (28, 34, 40) which wraps around a bushing pair (14).

11. The joint body (10) according to Claim 10,
**characterised in that** the at least one support body (20, 22) at least partially encloses a plurality of guideways (42, 44, 46, 48, 50, 52).

12. The joint body (10) according to one of the previous claims,
**characterised in that** the insert body (18, 36) or/and the support body (20, 22) is/are preferably made from metal, metal fabric, metal wool, in particular from aluminium, non-ferrous alloys, filled or non-filled synthetics or a thermoplastic elastomer.

13. The joint body (10) according to Claim 12,
**characterised in that** the insert body (18, 36) and the support body (20, 22) are preferably reinforced by embedded carbon, glass and/or metal fibres.

14. The joint body (10) according to one of the previous claims,
**characterised in that** at each end of a bushing (14) a collar (24) each is attached which axially supports the loop packet (28, 34, 40) on the respective bushing (14).

15. A shaft arrangement with a joint body (10) according to one of Claims 1 to 14.

## Revendications

1. Corps d'articulation élastique (10) pour un agencement d'arbres, destiné à relier de manière articulée deux parties d'arbre et comprenant :
- une pluralité de douilles (14) qui sont disposées en direction circonférentielle à des intervalles angulaires prédéterminés par rapport à un axe médian (M) du corps d'articulation (10),
- une pluralité de paquets de boucles (26, 28, 30), chaque paquet de boucles (26, 28, 30) étant enroulé autour de deux douilles (14) adjacentes, et
- une enveloppe à élasticité caoutchoutique (12) dans laquelle tous les paquets de boucles (26, 28, 30) et les douilles (14) sont enrobés au moins en partie,
un agencement d'appui (16) étant enrobé au moins en partie dans l'enveloppe à élasticité caoutchoutique (12), l'agencement d'appui (16) soutenant au moins une partie d'un paquet de boucles (26, 28, 30) entre des douilles (14) adjacentes,
ledit au moins un agencement d'appui (16) présentant un corps d'insertion (18, 36) disposé entre deux douilles (14) adjacentes,
**caractérisé en ce que**
ledit au moins un agencement d'appui (16) présente au moins un corps d'appui (20, 22) associé à une douille (14) individuelle,
le corps d'insertion (18, 36) étant disposé à distance des douilles (14) et du corps d'appui (20, 22) associé aux douilles (14),
et le corps d'appui (20, 22) étant disposé sur une douille (14) entre deux collets (24).

2. Corps d'articulation (10) selon la revendication 1,
**caractérisé en ce que** des douilles (14) adjacentes sont entourées par paires par au moins un desdits paquets de boucles (26, 28, 30), l'agencement d'appui (16) formant un guide pour ledit au moins un des paquets de boucles (26, 28, 30).

3. Corps d'articulation (10) selon la revendication 1 ou 2,
**caractérisé en ce que** ledit au moins un corps d'insertion (18, 36) présente des zones de réception (32, 38) pour des brins parallèles d'au moins un paquet de boucles (26, 28, 30).

4. Corps d'articulation (10) selon l'une des revendications 1 à 3,
**caractérisé en ce que** des paires de douilles (14) se succédant en direction circonférentielle dans le corps d'articulation (10) sont entourées alternativement par une paire de paquets de boucles (28, 34) ou un paquet de boucles individuel (40), au moins un corps d'insertion (18) étant prévu entre deux douilles (14) adjacentes entourées par une paire de paquets de boucles (28, 34), lequel présente des zones de réception (32) pour des brins parallèles (28a, 28b, 34a, 34b) de la paire de paquets de boucles (28, 34), et au moins un corps d'insertion (36) étant prévu entre deux douilles (14) entourées par un paquet de boucles individuel (40), lequel présente des zones de réception (38) pour des brins parallèles du paquet de boucles individuel (40a, 40b).

5. Corps d'articulation (10) selon l'une des revendications 2 à 4,
**caractérisé en ce qu'**une pluralité de corps d'insertion (18, 36) est disposée à intervalles angulaires réguliers.

6. Corps d'articulation (10) selon l'une des revendications 4 ou 5,
**caractérisé en ce que** ledit au moins un corps d'insertion (18) entre les douilles (14) présente dans ses zones de coin des zones de réception (32) pour la paire de paquets de boucles (28, 34).

7. Corps d'articulation (10) selon l'une des revendications 2 à 5,
**caractérisé en ce que** le corps d'insertion (36) présente dans sa zone centrale des zones de réception (38) pour un paquet de boucles individuel (40).

8. Corps d'articulation (10) selon la revendication 7,
**caractérisé en ce que** ledit au moins un corps d'appui (20, 22) associé à une douille (14) présente au moins une voie de guidage (42, 44, 46, 48, 50, 52) d'au moins un paquet de boucles (28, 34, 40).

9. Corps d'articulation (10) selon la revendication 8,
**caractérisé en ce que** ledit au moins un corps d'appui (20, 22) associé à une douille (14) présente des voies de guidage supérieure et inférieure (42, 46) pour une paire de paquets de boucles (28, 34), le corps d'appui (20, 22) présentant dans la direction de la douille suivante de la paire de douilles entourée par la paire de paquets de boucles (28, 34), entre les voies de guidage supérieure et inférieure (42, 44, 46, 48), une voie de guidage intermédiaire (50, 52) et entourant celle-ci en partie.

10. Corps d'articulation (10) selon la revendication 9,
**caractérisé en ce que** la voie de guidage intermédiaire (50, 52) du corps d'appui (20, 22) reçoit un seul paquet de boucles (28, 34, 40) enroulé autour d'une paire de douilles (14).

11. Corps d'articulation (10) selon la revendication 10,
**caractérisé en ce que** ledit au moins un corps d'appui (20, 22) entoure au moins en partie une pluralité de voies de guidage (42, 44, 46, 48, 50, 52).

12. Corps d'articulation (10) selon l'une des revendications précédentes,
**caractérisé en ce que** le corps d'insertion (18, 36) ou/et le corps d'appui (20, 22) sont réalisés de préférence en métal, tissu métallique, laine métallique, en particulier en aluminium, alliages non ferreux, en matières plastiques chargées ou non chargées ou dans un élastomère thermoplastique.

13. Corps d'articulation (10) selon la revendication 12,
**caractérisé en ce que** le corps d'insertion (18, 36) et le corps d'appui (20, 22) sont renforcés de préférence par des fibres de carbone, de verre et/ou métalliques incorporées.

14. Corps d'articulation (10) selon l'une des revendications précédentes,
**caractérisé en ce qu'**à chaque extrémité d'une douille (14) est fixé un collet (24) qui soutient axialement le paquet de boucles (28, 34, 40) sur la douille (14) concernée.

15. Agencement d'arbres avec un corps d'articulation (10) selon l'une des revendications 1 à 14.
